# EUROPÄISCHE PATENTSCHRIFT

(11) **EP 3 282 129 B1**
(45) Veröffentlichungstag und Bekanntmachung des Hinweises auf die Patenterteilung: **14.07.2021**
(21) Anmeldenummer: 16202522.5
(22) Anmeldetag: 06.12.2016
(51) Int. Cl.: F04D 19/04, F04D 27/02, F04D 29/52, F04D 29/64, G01M 3/20, F04D 29/70

(54) **VAKUUMSYSTEM UMFASSEND EIN DRUCKGESTEUERTES VENTIL**
VACUUM SYSTEM COMPRISING A PRESSURE CONTROLLED VALVE
SYSTÈME À VIDE COMPRENANT UNE VALVE COMMANDÉE PAR PRESSION

(30) Priorität: 12.08.2016 DE 102016114983
(43) Veröffentlichungstag der Anmeldung: 14.02.2018
(73) Patentinhaber: PFEIFFER VACUUM GMBH, 35614 Asslar (DE)
(72) Erfinder: LOHSE, Martin, 35586 Wetzlar (DE); SCHWEIGHÖFER, Michael, 35641 Schöffengrund (DE); STOLL, Tobias, 35644 Hohenahr (DE); HOFMANN, Jan, 35305 Grünberg (DE)
(74) Vertreter: Manitz Finsterwald Patent- und Rechtsanwaltspartnerschaft mbB

(56) Entgegenhaltungen:
- EP-A1- 0 534 825
- EP-A1- 2 927 500
- EP-A2- 1 205 741
- WO-A1-2004/068099
- JP-A- H0 539 797
- JP-A- 2008 095 504
- JP-A- 2009 085 242

## Beschreibung

Die vorliegende Erfindung betrifft ein Vakuumsystem mit einer Vakuumpumpe oder einer Anordnung aus zumindest einer Vakuumpumpe und wenigstens einem Rezipienten, bevorzugt einer Vakuumkammer oder einem Messgerät wie z.B. einem Elektronenmikroskop. Weiterhin betrifft die Erfindung ein Verfahren zum Betreiben eines solchen Vakuumsystems.

Bei einer Ausführungsform ist die Vakuumpumpe eine Turbomolekularvakuumpumpe, insbesondere Splitflow-Pumpe, mit einem Gehäuse, welches zumindest einen Einlass zum Anschluss der Pumpe an einen Rezipienten aufweist, und einem in dem Gehäuse angeordneten, sich während des Betriebs um eine Rotorachse drehenden Rotor, der in wenigstens einer Rotorebene eine Mehrzahl von in Umfangsrichtung beabstandet angeordneten Rotorschaufeln aufweist.

Vakuumgeräte haben bestimmungsgemäß in vielen Fällen mindestens einen abgeschlossenen oder mit anderen Geräten verbundenen Innenraum, dessen Absolutdruck unterhalb eines Umgebungsdrucks, z.B. eines Atmosphärendrucks, der Geräteumgebung liegt. In Ausnahmefällen kann ein Gerät auch innerhalb einer Gesamtanlage in einem Vakuumraum angeordnet sein und im Inneren z.B. Vorrichtungen aufweisen, die auf einem anderen Druckniveau als dem des Vakuumraums, sowohl niedriger, gleich oder auch höher dem atmosphärischen Umgebungsdruck der Gesamtanlage, betrieben werden.

JP 2008 095504 A, WO 2004/068099 A1, EP 1 205 741 A2, JP 2009 085242 A, EP 2 927 500 A1, EP 0 534 825 A1 und JP H05 39797 A sind relevante Dokumente aus dem Stand der Technik.

Es ist eine Aufgabe der Erfindung, ein einfach und/oder flexibel betreibbares und/oder betriebssicheres Vakuumsystem sowie ein einfaches und/oder flexibles Verfahren zum Betreiben eines Vakuumsystems zu schaffen.

Diese Aufgabe wird erfindungsgemäß gelöst durch ein Vakuumsystem nach Anspruch 1 und ein Verfahren nach Anspruch 5. Die abhängigen Ansprüche geben vorteilhafte Weiterbildungen der Erfindung an.

Gemäß der Erfindung umfasst das Vakuumsystem einen Arbeitsbereich, ein Trennorgan und einen Steuerraum, welcher durch das Trennorgan von dem Arbeitsbereich getrennt ist und in welchem während des Betriebs der Vakuumpumpe ein relativ zum Druck im Arbeitsbereich veränderbarer Steuerdruck herrscht. Dabei ist durch Verändern des Steuerdrucks mittels des Trennorgans eine Arbeitsbewegung im Arbeitsbereich durchführbar.

Das erfindungsgemäße Vakuumsystem erlaubt eine besonders kompakte Bauart, einen einfachen Aufbau und, insbesondere mit den vorstehenden Vorteilen einhergehend, geringe Herstellungskosten, insbesondere gegenüber einer Verwendung eines gewöhnlichen, beispielsweise elektromagnetisch betriebenen Aktors, z.B. Stellmotor oder Hubmagnet.

Die Arbeitsbewegung lässt sich erfindungsgemäß zumindest in der Nähe des Arbeitsbereichs ohne Erzeugung von elektrischen Feldern oder Magnetfeldern bewirken. Hierdurch werden gegebenenfalls im Arbeitsbereich vorhandene elektromagnetisch empfindliche Elemente, wie z.B. Elektronenmikroskope, nicht negativ beeinflusst.

Die Nutzung eines Steuerdrucks führt zu einer geringen Leistungsaufnahme zur Bewirkung der Arbeitsbewegung und trägt somit zu einer guten Energieeffizienz des Vakuumsystems und zu einer geringen Wärmegeneration im Arbeitsbereich bei.

Insbesondere kann der Arbeitsbereich im Betrieb des Vakuumsystems einen Druck aufweisen, der niedriger ist als ein Umgebungsdruck des Vakuumsystems. In diesem Fall ist der Arbeitsbereich ein Vakuumbereich.

Beispielsweise kann nur das Trennorgan die Arbeitsbewegung durchführen.

Zusätzlich oder alternativ kann das Trennorgan durch seine Arbeitsbewegung eine Arbeitseinrichtung, beispielsweise einen Schieber, Hebel oder Schalter, beaufschlagen, insbesondere mechanisch, pneumatisch, hydraulisch, elektrisch und/oder magnetisch. Die Beaufschlagung muss keine Arbeitsbewegung zusätzlich zu jener des Trennorgans zur Folge haben, d.h. die beaufschlagte Arbeitseinrichtung muss sich selbst nicht bewegen. Beispielsweise kann ein elektrisch leitfähiges Trennorgan einen elektrischen Kontakt zwischen zwei Bereichen einer stationären Arbeitseinrichtung herstellen.

Bei einer anderen Ausführungsform veranlasst das Trennorgan durch Zusammenwirken mit einer Arbeitseinrichtung diese zu einer Arbeitsbewegung.

Bei einer weiteren Ausführungsform umfasst die Arbeitseinrichtung einen Verschluss, eine Klappe, ein Ventil, eine Ventilkomponente, ein Wälz- oder Magnetlager oder eine Komponente eines Wälz- oder Magnetlagers.

Der Arbeitsbereich umfasst zumindest einen Strömungspfad, insbesondere einen Fluidkanal, für das Arbeitsfluid, wobei durch die Arbeitsbewegung die Fluidströmung entlang des Strömungspfades beeinflussbar ist. Grundsätzlich kann das Arbeitsfluid ein beliebiges Gas oder eine beliebige Flüssigkeit sein oder umfassen. Zum Beispiel kann das Arbeitsfluid Luft sein oder umfassen.

Erfindungsgemäß ist durch die Arbeitsbewegung ein Strömungsquerschnitt des Strömungspfades an zumindest einer Arbeitsstelle veränderbar.

Das Trennorgan kann beispielsweise außerhalb des Arbeitsbereiches angeordnet sein.

Alternativ oder zusätzlich kann die Arbeitsbewegung eine Bewegung des Trennorgans in den Arbeitsbereich hinein umfassen.

Bei einer weiteren Ausführungsform beeinflusst die Arbeitsbewegung den Arbeitsbereich, insbesondere lediglich, passiv. Der Begriff "passiv" kann im Zusammenhang mit der vorliegenden Erfindung bedeuten, dass die Beeinflussung im Wesentlichen frei von Leistungsübertragung auf ein im Arbeitsbereich befindliches Arbeitsmedium und/oder energieneutral in Bezug auf das Arbeitsmedium ist. Insbesondere kann eine passive Beeinflussung bewirken, dass ein Arbeitsmedium bezüglich einer Strömung des Arbeitsmediums lediglich mehr oder weniger behindert wird. Beispielsweise kann, insbesondere lediglich, eine Querschnittsveränderung eines im Arbeitsbereich befindlichen Fluidkanals bewirkt werden, um den Arbeitsbereich passiv zu beeinflussen.

Bei einer weiteren Ausführungsform löst die Arbeitsbewegung im Arbeitsbereich einen Betätigungsvorgang aus oder führt diesen selbst aus.

Ebenfalls kann mit Vorteil vorgesehen sein, dass das Trennorgan als Schalter betreibbar ist, insbesondere als bistabiler Schalter.

Bei einer Weiterbildung ist das Trennorgan durch Verändern des Steuerdrucks zwischen wenigstens zwei Schaltstellungen bewegbar. Weiterhin kann das Trennorgan auch stufenlos bewegbar oder betätigbar sein.

Das Trennorgan kann auch zu einer linearen Bewegung oder zu einer Bewegung mit einem nicht-linearen Bewegungsprofil ansteuerbar sein.

Bei einer weiteren Ausführungsform weist das Trennorgan eine Rückstellfunktion auf. Beispielsweise kann das Trennorgan durch die Rückstellfunktion stets in einem definierten Zustand in Abhängigkeit von einem Druck im Steuerraum gehalten werden.

Alternativ oder zusätzlich kann für das Trennorgan eine Rückstelleinrichtung, z.B. Feder, vorgesehen sein.

Gemäß einer Weiterbildung ist das Trennorgan durch Umkehren des Steuerdrucks rückstellbar.

Erfindungsgemäß ist vorgesehen, dass eine Verbindung zwischen dem Steuerraum und dem Arbeitsbereich, nämlich einem Abschnitt des Arbeitsbereichs am Auslass der Vakuumpumpe, vorgesehen ist, die einen am Auslass herrschenden Druck an den Steuerraum kommuniziert. Bei dem Druck handelt es sich um einen Druck, der im Arbeitsbereich dann herrscht, wenn das Vakuumsystem in Betrieb ist, z.B. während des Betriebs einer Vakuumpumpe.

Typischerweise ist ein Druck im Arbeitsbereich während des Betriebs von einem Umgebungsdruck verschieden, insbesondere kleiner als ein Umgebungsdruck.

Die Verbindung kann beispielsweise bezüglich einer Durchlässigkeit bzw. eines Leitwerts steuerbar sein.

Erfindungsgemäß ist eine Vorvakuumpumpe vorgesehen, um am Auslass der Vakuumpumpe ein Vorvakuum zu erzeugen, und die Verbindung kommuniziert einen Vorvakuumdruck an den Steuerraum.

Weitere Vorteile ergeben sich, wenn gemäß einer weiteren Ausführungsform für den Steuerraum eine erste Verbindung zu einem ersten Bereich mit einem ersten Druck und eine zweite Verbindung zu einem zweiten Bereich mit einem zweiten Druck vorgesehen sind, wobei zumindest eine, insbesondere beide, der Verbindungen bezüglich einer Durchlässigkeit oder eines Leitwerts steuerbar ist. Die Verbindungen können beispielsweise auch durch ein gemeinsames Steuerorgan, z.B. ein Schaltventil, steuerbar sein.

Bei einer weiteren Ausführungsform ist in zumindest einer der Verbindungen eine oder eine den Verbindungen gemeinsame Drossel zum Drosseln der Kommunikation des jeweiligen Drucks an den Steuerraum vorgesehen. Die Drossel kann ebenfalls bezüglich ihrer Drosselwirkung steuerbar sein.

Alternativ oder zusätzlich kann eine Schaltvorrichtung vorgesehen sein, mittels derer wahlweise ein erster Druck oder ein von dem ersten Druck verschiedener zweiter Druck an den Steuerraum kommunizierbar ist. Dabei ist der erste oder der zweite Druck ein an einem Auslass einer Vakuumpumpe herrschender Druck. Zusätzlich kann der jeweils andere erste oder zweite Druck ein Umgebungsdruck sein.

Bei einer weiteren Ausführungsform ist für den Steuerraum eine steuerbare Verbindung zu einem Umgebungsdruck vorgesehen.

Das Trennorgan kann beispielsweise als eine Membran ausgebildet sein oder eine Membran umfassen.

Das Trennorgan kann beispielsweise auch eine Rollmembran und/oder metallische Membran sein und/oder flexibel, planar, taschenförmig, wellbalgartig und/oder ein- oder mehrlagig ausgebildet sein.

Gemäß einem weiteren Beispiel kann ein Ventil vorgesehen sein, welches in einem Fluidkanal angeordnet und durch ein als Membran ausgeführtes Trennorgan steuerbar ist. Das Trennorgan kann alternativ oder zusätzlich zum Steuern des Fluidflusses im Fluidkanal ein Ventilelement bewegen. Alternativ oder zusätzlich kann das Trennorgan zum Steuern des Fluidflusses selbst einen Querschnitt eines Fluidkanals verändern.

Für die Arbeitsbewegung kann z.B. eine Endlagenabfrage vorgesehen sein. Eine Endlageninformation kann beispielsweise von einer Steuerungseinrichtung des Vakuumsystems verarbeitet und/oder genutzt werden.

Gemäß der Erfindung umfasst das Vakuumsystem eine Einrichtung, die dazu ausgebildet ist, die Fluidströmung entlang des Strömungspfades an zumindest einem Abschnitt des Strömungspfades zu beeinflussen.

Dies erlaubt in einfacher Weise ein besonders flexibel ansteuerbares Vakuumsystem.

Bei einer Ausführungsform umfasst die Einrichtung wenigstens ein Stellorgan, das zum Beeinflussen der Fluidströmung zu einer Stellbewegung ansteuerbar ist.

Erfindungsgemäß ist die Einrichtung dazu ausgebildet, einen Strömungsquerschnitt des Strömungspfades an dem Abschnitt zu verändern.

Weiterhin ist es vorteilhaft, wenn gemäß einem weiteren Ausführungsbeispiel die Einrichtung dazu ausgebildet ist, einen Leitwert des Strömungspfades an dem Abschnitt zu verändern. Beispielsweise kann der Leitwert durch das Trennorgan selbst oder durch ein von dem Trennorgan bewegtes Element veränderbar sein. Der Leitwert kann beispielsweise auch durch Betätigung eines Ventils veränderbar sein. Das Ventil kann beispielsweise in dem Abschnitt angeordnet sein und den Abschnitt wahlweise zumindest teilweise öffnen oder schließen. Insbesondere kann das Ventil druckgesteuert sein, insbesondere durch einen Druck am Auslass einer Vakuumpumpe.

Erfindungsgemäß umfasst das Vakuumsystem eine Vakuumpumpe, wobei die Vakuumpumpe zumindest einen Einlass zum Einlassen von zu förderndem Arbeitsfluid aus einem Rezipienten und einen Auslass zum Ausstoßen des zu fördernden Arbeitsfluids aufweist, wobei der Strömungspfad zwischen Einlass und Auslass der Vakuumpumpe definiert ist.

Insbesondere kann der Abschnitt an einem Einlass einer Vakuumpumpe angeordnet sein oder den Einlass bilden.

Der Abschnitt kann an zumindest einem von mehreren Einlässen einer Vakuumpumpe angeordnet sein. Insbesondere kann es sich bei der Vakuumpumpe um eine sogenannte Splitflow-Vakuumpumpe handeln. Dieser Typ von Vakuumpumpe ist dem Fachmann bekannt, sodass hierauf nicht näher eingegangen zu werden braucht. Beispielsweise kann der eine von mehreren Einlässen zwischen zwei Pumpstufen der Vakuumpumpe in einen Hauptströmungspfad münden. Die Pumpstufen können jeweils beispielsweise als eine Turbo-, Holweck-, Siegbahn-, Gaede- oder nichtmolekulare Pumpstufe oder Kombinationen hiervon ausgebildet sein.

Durch Beeinflussen der Fluidströmung an dem Abschnitt kann beispielsweise zumindest ein Leistungsparameter der Vakuumpumpe für den jeweiligen Einlass, insbesondere im Wesentlichen unabhängig von weiteren Einlässen, einstellbar sein.

Bei einer Ausführungsform können sich unterschiedliche Druckniveaus in einem am betreffenden Einlass angeschlossenen Rezipienten einstellen lassen. Ein derart ausgestaltetes Vakuumsystem lässt sich besonders flexibel und unter vielen unterschiedlichen Betriebsszenarien bedarfsgerecht betreiben.

Erfindungsgemäß ist die Einrichtung dazu ausgebildet, einen offenen Querschnitt in dem Abschnitt des Strömungspfades in seiner Größe zu verändern, um die Fluidströmung zu beeinflussen.

Die Größe des offenen Querschnitts kann auf zumindest zwei unterschiedliche Werte einstellbar sein.

Die Größe des offenen Querschnitts kann auch zumindest im Wesentlichen stufenlos einstellbar sein.

Die Einrichtung umfasst das Trennorgan und den Steuerraum gemäß der Erfindung, wobei der Abschnitt des Strömungspfads dem Arbeitsbereich entspricht oder Teil des Arbeitsbereichs ist und mittels der Arbeitsbewegung die Fluidströmung an dem Abschnitt beeinflussbar ist.

Gemäß einer Ausführungsform der Erfindung lassen sich insbesondere verschiedene Fluidströmungen im Wesentlichen unabhängig voneinander ansteuern. So kann beispielsweise an unterschiedlichen Abschnitten von, insbesondere unterschiedlichen, Strömungspfaden zumindest ein jeweiliger Leitwert zumindest im Wesentlichen unabhängig von anderen Abschnitten eingestellt werden. Hierdurch lässt sich das Vakuumsystem besonders flexibel und angepasst an verschiedenste Betriebsszenarien betreiben.

Beispielsweise können so unterschiedliche Drücke an einem von mehreren Einlässen, insbesondere im Wesentlichen unabhängig von anderen Einlässen, eingestellt werden. Beispielsweise ist es auch möglich, für einen Einlass bzw. Rezipienten einen Leitwert zu verringern, um beispielsweise die Vakuumpumpe oder das Vakuumsystem vor einem in dem betreffenden Rezipienten herrschenden hohen Druck zu schützen. Auch kann das Vakuumsystem, beispielsweise durch Schließen eines Ein- oder Auslasses, vor Partikeln, Stäuben, Ölen oder sonstigen zu erwartenden Störelementen, welche aus dem Rezipienten stammen können, geschützt werden. Andersherum kann auch ein Rezipient vor dem Vakuumsystem entstammenden Störelementen geschützt werden, wie z.B. unerwünscht austretendem Öl oder einem in einem Fehlerfall, insbesondere einer inneren Kollision, gelösten Rotorteil. Ferner kann beispielsweise beim Anfahren eines Vakuumsystems gezielt einstellbar sein, welcher Rezipient welche Pumpleistung erfährt, also z.B. welcher Rezipient stärker oder schneller abgepumpt wird. Alternativ oder zusätzlich kann ein Druck an einem Abschnitt, Einlass und/oder Rezipient durch die erfindungsgemäße Beeinflussung steuerbar sein. Grundsätzlich kann eine Fluiddurchlässigkeit bzw. ein Leitwert des Abschnitts stufenweise oder stufenlos einstellbar sein, insbesondere in Abhängigkeit von Betriebszuständen oder Parametern des Vakuumsystems, wie beispielsweise einem Druck, insbesondere Vorvakuumdruck. Alternativ oder zusätzlich kann beispielsweise eine Flutfestigkeit für einen betreffenden Rezipienten, insbesondere individuell, einstellbar sein.

Die erfindungsgemäße Beeinflussung kann beispielsweise durch eine elektronische Steuerung gesteuert werden. Es ist jedoch auch vorteilhaft möglich, die Beeinflussung ausschließlich mechanisch, insbesondere durch einen als Steuerdruck für die Beeinflussung verwendeten Druck im oder am Vakuumsystem, durchzuführen. Auch eine Kombination einer mechanischen Steuerung und einer elektronischen Steuerung ist möglich.

Die Einrichtung, welche die Fluidströmung beeinflusst, kann beispielsweise ein Ventil, ein, insbesondere bewegliches, Schutzgitter, eine Anordnung mit beweglichen Lamellen, eine Iris und/oder eine Mehrzahl und/oder Kombination der genannten Elemente umfassen, wobei die Elemente insbesondere relativ zu einander beweglich sein können. In einem anschaulichen Beispiel lassen sich zwei in Strömungsrichtung kurz hintereinander angeordnete Schutzgitter relativ zueinander quer zur Strömungsrichtung verschieben, sodass hierdurch die Durchlässigkeit bzw. der Leitwert des betreffenden Abschnitts einstellbar ist.

Die Beeinflussungseinrichtung kann beispielsweise Teil einer Vakuumpumpe oder aber Teil eines zusätzlichen Elements sein. Beispielsweise kann die Einrichtung an einem Einlass einer Vakuumpumpe angeordnet sein und z.B. entweder als ein der Vakuumpumpe eigenes Element ausgebildet sein oder durch ein zusätzliches Element, wie z.B. ein an einen Einlassflansch anbringbares Element, z.B. ein Leitungselement, sein. Es ist also beispielsweise auch möglich, insbesondere im Hinblick auf ein zusätzliches Element als Beeinflussungeinrichtung oder als ein Teil davon, eine Nachrüstung für ein bestehendes Vakuumsystem bereitzustellen.

Der Abschnitt des Strömungspfades kann beispielsweise auch ein Bypass des Vakuumsystems sein.

Bei einer beispielhaften Anwendung kann ein möglichst hohes Saugvermögen an einem Rezipienten einer Vakuumpumpe, insbesondere mit mehreren Einlässen, benötigt werden, beispielsweise um eine initiale Evakuierungszeit für den betreffenden Rezipienten zu verringern. Auch kann ein definierter Druck benötigt werden, wobei ein Saugvermögen eine nötige einzulassende Gaslast bestimmt. Die Gaslast beeinflusst weiterhin den Energieverbrauch und die Abwärme der Vakuumpumpe. Durch eine Drosselung des Saugvermögens kann die Gaslast reduziert und somit können Energieverbrauch und Abwärme reduziert werden.

Gemäß der Erfindung wird ein Verfahren zum Betreiben eines erfindungsgemäßen Vakuumsystems vorgestellt. Bei dem Verfahren wird eine Fluidströmung von Arbeitsfluid entlang eines Strömungspfades in Abhängigkeit von einem am Auslass der Vakuumpumpe herrschenden Druck beeinflusst.

Ein weiteres Beispiel betrifft ein Verfahren zum Betreiben eines eine Vakuumpumpe umfassenden Vakuumsystems, wobei die Vakuumpumpe zumindest zwei Einlässe und wenigstens einen Auslass umfasst und zwischen einem jeweiligen Einlass und dem oder einem jeweiligen Auslass jeweilige, zumindest teilweise voneinander verschiedene Strömungspfade definiert, und wobei eine Fluidströmung in zumindest einem Strömungspfad, insbesondere individuell, beeinflusst wird. Insbesondere kann es sich um ein Vakuumsystem oder um eine Vakuumpumpe gemäß einer oder einer Kombination von hierin beschriebenen Ausführungsformen von Vakuumsystemen und Vakuumpumpen handeln.

Gemäß einem Ausführungsbeispiel ist die Vakuumpumpe durch eine Turbomolekularpumpe gebildet, die sich insbesondere dadurch auszeichnet, dass im Bereich des Einlasses zumindest ein Hinderungsmittel vorgesehen ist, welches derart angeordnet und/oder ausgebildet ist, dass ein in einem Fehlerfall gelöstes Rotorteil, insbesondere eine Rotorschaufel oder ein Fragment einer Rotorschaufel, daran gehindert oder dabei behindert wird, aus dem Einlass auszutreten.

Empfindliche Objekte im Einflussbereich der Turbomolekularpumpe werden somit vor gelösten und insbesondere mit hoher Geschwindigkeit umherfliegenden Rotorteilen geschützt. Auch wenn es durch das Hinderungsmittel beispielsweise nicht vollkommen ausgeschlossen werden kann, dass das Rotorteil das empfindliche Objekt im Einflussbereich der Turbopumpe erreicht und beschädigt, wird durch das Hinderungsmittel zumindest die Wahrscheinlichkeit hierfür verringert und/oder die Geschwindigkeit der Rotorteile reduziert, so dass insgesamt eine höhere Sicherheit für die empfindlichen Objekte gewährleistet ist und somit die Betriebssicherheit der erfindungsgemäßen Pumpe erhöht wird.

Der Einflussbereich der Turbomolekularvakuumpumpe kann beispielsweise einen an den Einlass angeschlossenen Rezipienten umfassen. Die empfindlichen Objekte können beispielsweise, insbesondere in dem Rezipienten befindliche, empfindliche Geräte umfassen.

Bei einer Ausführungsform ist das Hinderungsmittel in einer erwarteten Flugbahn eines gelösten Rotorteils als dessen erstes Hindernis angeordnet und zur Umlenkung des Rotorteils weg von dem Einlass ausgebildet.

Gemäß einer weiteren Ausführungsform kann das Hinderungsmittel dazu ausgebildet sein, durch Kollision dem Rotorteil kinetische Energie zu nehmen.

Das Hinderungsmittel kann zum Beispiel als Vorsprung oder Kante, insbesondere als eine Fangkante, ausgebildet sein. Alternativ oder zusätzlich kann das Hinderungsmittel an einer Innenfläche des Gehäuses angeordnet sein. Grundsätzlich kann das Hinderungsmittel z.B. länglich ausgebildet sein.

Bei einer Weiterbildung erstreckt sich das Hinderungsmittel an einer Innenfläche des Gehäuses entlang um die Rotorachse herum.

Bei noch einer Weiterbildung erstreckt sich das Hinderungsmittel nur über einen Teilumfang der Innenfläche um die Rotorachse herum. Hierdurch kann das Hinderungsmittel gezielt an einem bestimmten Teilumfang eingesetzt werden, um gelöste Rotorteile aufzuhalten, wobei aber am übrigen Teilumfang eine glatte Oberfläche vorgesehen sein kann, sodass sich in diesem übrigen Teilumfang der Leitwert der Vakuumpumpe nicht verschlechtert. Es lässt sich also ein gezielter Kompromiss aus erhöhter Sicherheit und nur unwesentlich verschlechtertem Leitwert erreichen. Insbesondere kann der Teilumfang radial in Richtung des Einlasses ausgerichtet sein. So kann sich das Hinderungsmittel beispielsweise zumindest über einen Winkelbereich erstrecken, der sich mit einem Winkelbereich des Einlasses in Bezug auf die Rotorachse im Wesentlichen deckt.

Das Hinderungsmittel kann beispielsweise bezüglich einer Pumprichtung in einem Bereich zwischen dem Einlass und den Rotorschaufeln angeordnet sein. Alternativ oder zusätzlich kann sich das Hinderungsmittel zumindest im Wesentlichen quer zu oder entlang einer Pumprichtung erstrecken. Unabhängig hiervon kann sich das Hinderungsmittel zumindest im Wesentlichen quer oder axial in Bezug auf die Rotorachse erstrecken.

Bei einer weiteren Ausführungsform ist das Hinderungsmittel durch eine, insbesondere längliche, Ausnehmung gebildet.

Bei einer Weiterbildung ist der Einlass mit einem Schutzgitter versehen. Dabei ist das Hinderungsmittel insbesondere dazu ausgebildet, das Schutzgitter gegen eine Verschiebung durch ein gelöstes Rotorteil zu sichern. Hierfür kann das Hinderungsmittel das Schutzgitter vorteilhafterweise formschlüssig sichern und beispielsweise eine Rastvorrichtung, Schnappkante und/oder einen Fixiervorsprung für das Schutzgitter umfassen. So lassen sich separate Befestigungsmittel, z.B. Schrauben, vermeiden, die beispielsweise Luft einschließen und so die Qualität oder Güte des zu erreichenden Vakuums gefährden könnten.

Das Hinderungsmittel kann zum Beispiel als integraler Teil eines Gehäuses der Turbopumpe oder alternativ als separates Bauteil oder an einem solchen ausgebildet sein. Das Hinderungsmittel kann zum Beispiel länglich sein und/oder sich quer oder axial in Bezug auf eine Pumprichtung und/oder den Rotor erstrecken.

Die Sicherheit gegen Austritt von Rotorteilen aus dem Einlass lässt sich weiter verbessern, indem die Rotorschaufeln außerhalb eines Einlassbereichs der Vakuumpumpe angeordnet sind. Insbesondere im Fall einer Splitflow-Vakuumpumpe können die Rotorschaufeln z.B. in axialer Richtung versetzt zu jeglichen Einlässen angeordnet sein.

Das Hinderungsmittel kann beispielsweise beweglich und/oder dynamisch ausgebildet sein. Alternativ kann das Hinderungsmittel aber auch starr und/oder statisch ausgebildet sein. Beispielsweise kann das Hinderungsmittel auch dazu ausgebildet sein, eine Fluidströmung entlang eines Strömungspfades an zumindest einem Abschnitt des Strömungspfades zu beeinflussen. So lassen sich beispielsweise der fünfte Aspekt der Erfindung und der zweite Aspekt der Erfindung und auch gegebenenfalls ihre hierin beschriebenen Ausführungsformen vorteilhaft kombinieren.

In einem weiteren Beispiel kann ein bewegliches Hinderungsmittel beispielsweise auch durch ein Trennorgan angetrieben und/oder gesteuert werden, welches einen Steuerraum von einem Arbeitsbereich der Vakuumpumpe trennt. Dabei kann insbesondere im Steuerraum ein relativ zum Druck im Arbeitsbereich veränderbarer Steuerdruck herrschen, wobei durch Verändern des Steuerdrucks mittels des Trennorgans eine Arbeitsbewegung im Arbeitsbereich durchführbar ist.

Grundsätzlich lassen sich die hierin beschriebenen Ausführungsformen der Erfindung vorteilhaft untereinander kombinieren.

Die Erfindung wird nachfolgend lediglich beispielhaft anhand der schematischen Zeichnung näher veranschaulicht.
- Fig. 1: zeigt ein in einem Fluidkanal angeordnetes, druckgesteuertes Ventil.
- Fig. 2: zeigt ein in einem Fluidkanal angeordnetes, druckgesteuertes Ventil gemäß einer weiteren Ausführungsform. Dabei zeigt Fig. 2A das Ventil in einer Geschlossenstellung, wohingegen Fig. 2B das Ventil in einer Offenstellung zeigt.
- Fig. 3: zeigt eine Splitflow-Vakuumpumpe.
- Fig. 4: zeigt eine Splitflow-Vakuumpumpe in perspektivischer Ansicht.
- Fig. 5: zeigt einen Teilbereich einer Splitflow-Vakuumpumpe in einer entlang einer Rotorachse geschnittenen Darstellung.
- Fig. 6: zeigt eine Splitflow-Vakuumpumpe in einer senkrecht zu einer Rotorachse verlaufenden Schnittdarstellung.
- Fig. 7: zeigt eine weitere Splitflow-Vakuumpumpe in einer ebenfalls senkrecht zu einer Rotorachse verlaufenden Schnittdarstellung.
- Fig. 8: zeigt schematisch eine weitere Splitflow-Vakuumpumpe.
- Fig. 9: zeigt einen Einlass einer weiteren Splitflow-Vakuumpumpe in einer perspektivischen Detailansicht.
- Fig. 10: zeigt den Einlass der Fig. 9 in einer Schnittansicht.

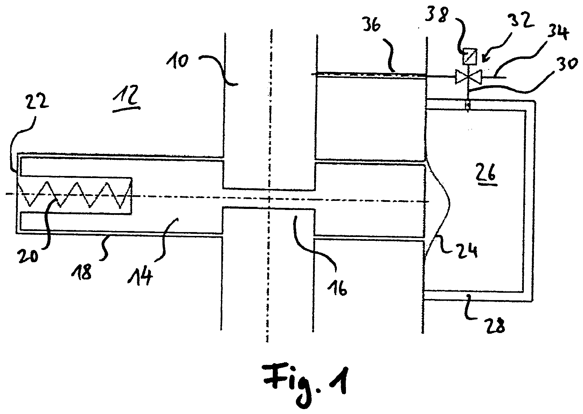

In Fig. 1 ist ein Teil eines als Vakuumpumpe ausgeführten Vakuumsystems gezeigt. Die Vakuumpumpe umfasst einen Fluidkanal 10, welcher einen Strömungspfad für ein Arbeitsmedium, zum Beispiel Luft, definiert. Der Fluidkanal 10 ist in einem Gehäuse 12 der Vakuumpumpe ausgebildet. In dem vorliegenden Ausführungsbeispiel verläuft eine Fluidströmung in dem Fluidkanal 10 während eines Betriebs der Vakuumpumpe in Fig. 1 von unten nach oben, wobei jedoch auch eine umgekehrte Strömungsrichtung vorgesehen sein kann.

Quer zum Fluidkanal 10 ist ein Ventilschieber 14 angeordnet, welcher in Abhängigkeit von seiner Lage den Fluidkanal 10 zumindest teilweise öffnet oder schließt. Der Ventilschieber 14 weist einen Durchlassbereich 16 auf, der in der in Fig. 1 dargestellten Lage des Ventilschiebers 14 in Bezug auf den Fluidkanal 10 ausgerichtet ist, also mit diesem in Strömungsrichtung übereinstimmt. Mit anderen Worten zeigt Fig. 1 den Ventilschieber in einer Offenstellung.

Der Ventilschieber 14 ist in einer Führung 18 linear geführt, so dass der Ventilschieber 14 in Bezug auf Fig. 1 eine horizontale Bewegung durchführen kann. Für den Ventilschieber 14 ist eine als Feder 20 ausgebildete Rückstelleinrichtung vorgesehen. Die Feder 20 spannt den Ventilschieber 14 gegenüber einer Gehäusewand 22 vor.

An einem der Rückstelleinrichtung gegenüberliegenden Ende des Ventilschiebers 14 ist ein als Membran 24 ausgebildetes Trennorgan vorgesehen. Die Membran 24 trennt einen zumindest auch durch den Fluidkanal 10 definierten Arbeitsbereich von einem Steuerraum 26. Der Steuerraum 26 ist durch eine Seite der Membran 24 sowie durch eine Steuerkammer 28 definiert. Der Steuerraum 26 ist durch die Membran 24 gegenüber dem Fluidkanal 10 abgedichtet.

Für den Steuerraum 26 ist eine Verbindung 30 zu einer Schalteinrichtung vorgesehen, welche in der vorliegenden Ausführungsform als Schaltventil 32, insbesondere als 3/2-Wege-Ventil, ausgeführt ist. Von dem Schaltventil 32 ist eine Verbindung 34 zu einem Umgebungsdruck vorgesehen. Außerdem ist das Schaltventil 32 über eine Verbindung 36 mit dem Arbeitsbereich verbunden, wobei in der vorliegenden Ausführungsform die Verbindung 36 in einen Bereich in Strömungsrichtung hinter dem Ventilschieber 14 mündet.

Das Schaltventil 32 ist dazu ausgestaltet, wahlweise entweder die Verbindung 36 mit der Verbindung 30, also den Fluidkanal 10 mit dem Steuerraum 26, oder die Verbindung 34 mit der Verbindung 30, also den Umgebungsdruck mit dem Steuerraum 26, zu verbinden. Hierfür weist das Schaltventil 32 ein Solenoid 38 auf.

Die Lage bzw. Position des Ventilschiebers 14 relativ zu dem Fluidkanal 10 ist abhängig von einem im Steuerraum 26 herrschenden Steuerdruck, welcher über die Membran 24 eine Kraft auf den Ventilschieber 14 entgegen einer Federkraft der Feder 20 bewirkt. Folglich lässt sich über den Steuerdruck im Steuerraum 26 die Lage des Ventilschiebers 14 im Wesentlichen stufenlos steuern. Ein hoher Steuerdruck im Steuerraum 26 versetzt den Ventilschieber 14 in die in Fig. 1 dargestellte Anschlaglage, also in Anschlag mit der Gehäusewand 22. Dagegen nimmt bei einem niedrigen Druck im Steuerraum 26 der Ventilschieber 14 eine andere Lage, nämlich in Fig. 1 weiter rechts, ein.

Der Steuerraum 26 lässt sich durch das Schaltventil 32 wahlweise mit dem Fluidkanal 10 oder mit dem Umgebungsdruck fluidisch verbinden. Über das Schaltventil 32 lässt sich also der im Steuerraum 26 herrschende Steuerdruck einstellen bzw. steuern. Hierdurch lassen sich bei Betrieb der Vakuumpumpe zumindest zwei unterschiedliche Druckniveaus in dem Steuerraum 26 einstellen, nämlich ein erster Druck, welcher einem in dem Fluidkanal 10 herrschenden Druck entspricht, oder ein zweiter Druck, welcher einem Umgebungsdruck entspricht.

Es können jedoch auch zwischen dem ersten und dem zweiten Druck liegende Zwischendrücke und somit in der gezeigten Ausführungsform entsprechende Stellungen des Ventilschiebers 14 realisierbar sein. Beispielsweise kann hierfür das Schaltventil 32, insbesondere mit relativ hoher Frequenz, periodisch zwischen den Verbindungen 34 und 36 umschalten. Hierdurch lässt sich die Trägheit des Systems vorteilhaft ausnutzen, um theoretisch beliebige Zwischendrücke einzustellen. Die hierfür notwendige Schaltfrequenz lässt sich beispielsweise in vorteilhafter Weise erniedrigen, indem eine oder mehrere, beispielsweise auch in ihrer Durchlässigkeit einstellbare, Drosseln in den Verbindungen 30, 34 und/oder 36 angeordnet werden.

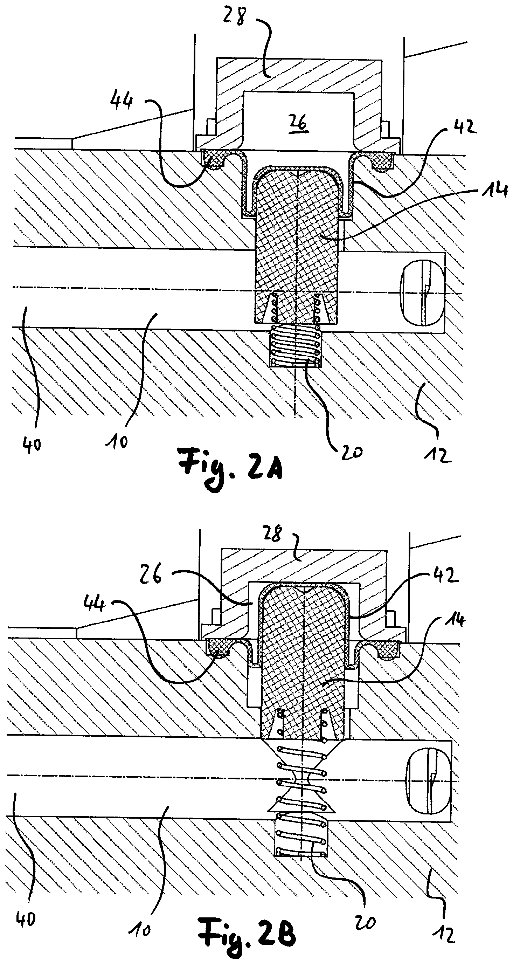

In Fig. 2 ist eine weitere Ausführungsform eines Teils eines als Vakuumpumpe ausgeführten Vakuumsystems gezeigt. Ein Gehäuse 12 der Vakuumpumpe definiert einen Fluidkanal 10, dessen in Fig. 2 linkes Ende einen Einlass 40 der Vakuumpumpe definiert. Das rechte Ende des Fluidkanals 10 mündet in einen Hauptströmungspfad der Vakuumpumpe, insbesondere zwischen zwei Vakuumpumpstufen,die jeweils beispielsweise als eine Turbo-, Holweck-, Siegbahn-, Gaede- oder nichtmolekulare Pumpstufe oder Kombinationen hiervon ausgebildet sein können.

Der Fluidkanal 10 ist durch einen Ventilschieber 14 wie in Fig. 2A gezeigt sperrbar und wie in Fig. 2B gezeigt freigebbar. Mit anderen Worten befindet sich der Ventilschieber 14 in Fig. 2A in einer Geschlossenstellung und in Fig. 2B in einer Offenstellung.

Der Ventilschieber 14 liegt an einem Ende, in Fig. 2 am oberen Ende, an einem als Rollmembran 42 ausgeführten Trennorgan an. An seinem der Rollmembran 42 gegenüberliegenden Ende ist für den Ventilschieber 14 eine Rückstellfeder 20 vorgesehen, welche den Ventilschieber 14 in Richtung der Rollmembran 42 und in seine Offenstellung vorspannt.

Mit einer dem Ventilschieber 14 abgewandten Seite der Rollmembran 42 definiert die Rollmembran 42 zumindest teilweise einen Steuerraum 26, welcher weiterhin von einer Steuerkammer 28 definiert ist. Ein in dem Steuerraum 26 herrschender Steuerdruck wird über die Rollmembran 42 auf den Ventilschieber 14 übertragen, so dass die Lage des Ventilschiebers 14 eine Funktion des im Steuerraum 26 herrschenden Steuerdrucks ist. Der Steuerdruck in dem Steuerraum 26 kann auf unterschiedliche Weise, zum Beispiel durch eine der hierin beschriebenen Varianten, eingestellt werden.

Anhand von Fig. 2 wird deutlich, dass ein als Rollmembran ausgebildetes Trennorgan einen besonders großen Stellweg erlaubt, insbesondere im Vergleich zu ansonsten moderaten Abmessungen des Trennorgans. Außerdem kann die Rollmembran zusätzlich dazu verwendbar sein, den Steuerraum 26 gegenüber dem Arbeitsbereich, hier Fluidkanal 10, abzudichten. In der Ausführungsform der Fig. 2 weist die Rollmembran 42 hierfür eine umlaufende Ringwulst 44 auf, die ähnlich einem O-Ring zwischen der Steuerkammer 28 und dem Gehäuse 12 verpressbar ist.

Die Rollmembran 42 schmiegt sich der Form des Ventilschiebers 14 an und rollt gegenüber diesem während einer Stellbewegung seitlich ab. Hierdurch ist auch eine präzise Kraftübertragung gewährleistet.

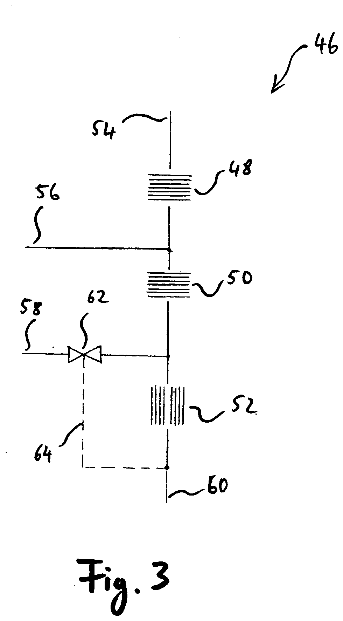

In Fig. 3 ist schematisch eine beispielhafte Splitflow-Vakuumpumpe 46 dargestellt, welche zwei Turbovakuum-Pumpstufen 48, 50 sowie eine Holweck-Pumpstufe 52 umfasst, welche in Reihe und auf einer gemeinsamen Rotorwelle angeordnet sind. Eine Hauptströmungsrichtung für ein Arbeitsmedium, zum Beispiel Luft, verläuft dabei entlang der Hochachse in Fig. 3 von oben nach unten.

Die Splitflow-Vakuumpumpe 46 weist ferner drei Einlässe 54, 56, 58 sowie einen Auslass 60 auf. Dabei mündet der Einlass 54 in Hauptströmungsrichtung vor der Turbovakuum-Pumpstufe 48, der Einlass 56 zwischen den Turbovakuum-Pumpstufen 48 und 50 und der Einlass 58 zwischen den Pumpstufen 50 und 52. Die Einlässe 54, 56, 58 sind dabei vorzugsweise an unterschiedliche Rezipienten angeschlossen. Das von den Einlässen 54, 56, 58 her geförderte Arbeitsmedium wird über den gemeinsamen Auslass 60 an eine Vorvakuumpumpe, welche nicht gesondert dargestellt ist, weitergeleitet.

Am Einlass 58 ist ein Ventil 62 angeordnet, welches dazu ausgebildet ist, einen Leitwert des Einlasses 58 zu beeinflussen. Das Ventil 62 ist als druckgesteuertes Ventil ausgebildet, d.h. der Leitwert des Einlasses 58 ist in Abhängigkeit eines Steuerdrucks einstellbar. Zur Bereitstellung des Steuerdrucks ist eine Steuerleitung 64 vorgesehen, welche in der vorliegenden Ausführungsform das druckgesteuerte Ventil 62 mit dem Auslass 60 verbindet. Die Steuerleitung 64 kommuniziert also einen am Auslass 60 herrschenden Druck als Steuerdruck an das Ventil 62, welches somit in Abhängigkeit von dem am Auslass 60 herrschenden Druck den Leitwert des Einlasses 58 steuert.

Ein Ventil nach Art des Ventils 62 kann beispielsweise auch an einem oder mehreren der anderen Einlässe 54, 56 angeordnet sein. Alternativ oder zusätzlich kann ein solches Ventil auch andernorts, beispielsweise im Hauptströmungspfad, angeordnet sein. Grundsätzlich kann ein beliebiger, insbesondere in einem Vakuumsystem herrschender, Druck als Steuerdruck Verwendung finden. Auch kann beispielsweise in der Steuerleitung 64 eine Drucksteuerkonfiguration z.B. gemäß Fig. 1, also zum Beispiel ein zusätzlicher Anschluss an einen Umgebungsdruck und/oder Schaltventil, vorgesehen sein.

Die in Fig. 3 gezeigte Ausführungsform bietet den Vorteil, dass sich der Leitwert des Einlasses 58 automatisch in Abhängigkeit des am Auslass 60 herrschenden Drucks einstellt, also keine zusätzliche, beispielsweise elektronische, Steuerung oder Regelung notwendig ist. Jedoch kann alternativ oder zusätzlich auch eine zusätzliche Ansteuerung für das Ventil vorgesehen sein, welche zum Beispiel durch ein Steuermodul der Vakuumpumpe durchgeführt werden kann. Insbesondere kann ein Steuerdruck für das Ventil 62 auch durch ein separates Drucksystem zur Verfügung gestellt werden. Grundsätzlich kann ein leitwertveränderndes Element, wie das Ventil 62, aber auf unterschiedliche Weisen angetrieben werden, zum Beispiel elektromagnetisch, hydraulisch und/oder über einen Formgedächtnis-Aktor.

Anhand von Fig. 3 lässt sich veranschaulichen, dass eine Beeinflussung einer Fluidströmung an zumindest einem Abschnitt eines Strömungspfades zu einer besonders flexibel ansteuerbaren und einsetzbaren Vakuumpumpe führen kann. Beispielsweise lässt sich am Einlass 58 eine Fluidströmung im Wesentlichen unabhängig von den anderen Einlässen 54, 56 steuern. Hierdurch können Leistungsparameter der Vakuumpumpe für den Einlass 58 gezielt und individuell eingestellt werden. Beispielsweise kann der Leitwert des Einlasses 58 besonders niedrig eingestellt werden, wenn an dem Einlass 58 bzw. in dem entsprechenden Rezipienten ein hoher Absolutdruck herrscht, welcher einzelne Vakuumkomponenten, wie zum Beispiel die Pumpstufen 50, 52, beschädigen könnte. Alternativ oder zusätzlich kann ein an dem Einlass 58 zur Verfügung gestelltes Saugvermögen je nach Bedarf eingestellt werden. Zum Beispiel kann eine Evakuierung des an dem Einlass 58 angeschlossenen Rezipienten wahlweise mehr oder weniger im Vergleich zu den anderen Einlässen 54, 56 verzögert werden. Die Beeinflussung der Fluidströmung in bestimmten Abschnitten der Vakuumpumpe erweist sich insbesondere im Zusammenhang mit einer Splitflow-Vakuumpumpe als vorteilhaft, insbesondere wenn verschiedene Pumpstufen der Vakuumpumpe auf einem gemeinsamen Rotor angeordnet sind.

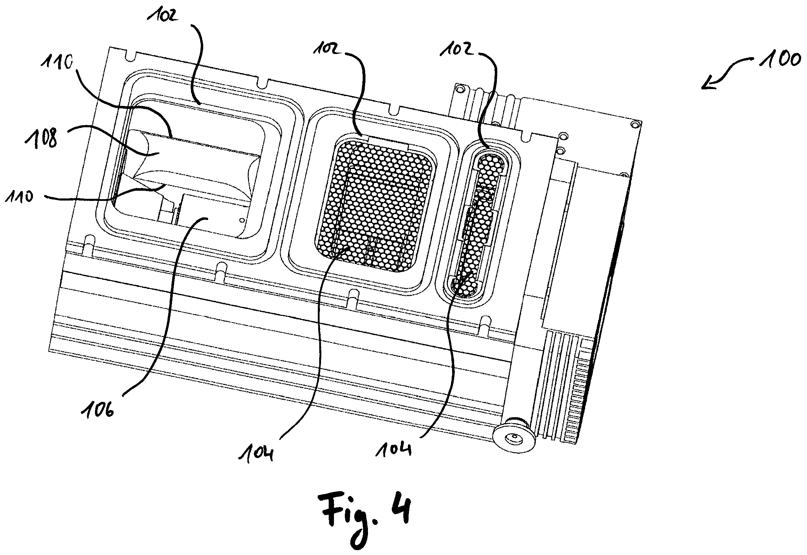

In Fig. 4 ist eine Splitflow-Vakuumpumpe 100 gezeigt, welche eine Mehrzahl an Einlässen 102, drei in dieser Ausführungsform, aufweist. Zwei der Einlässe 102 sind mit angebrachtem Schutzgitter 104 dargestellt, wobei der in Fig. 4 linke Einlass 102 zur Verbesserung der Sichtbarkeit des Inneren der Vakuumpumpe 100 ohne Schutzgitter dargestellt ist.

Durch den linken Einlass 102 ist ein Rotor 106 der Vakuumpumpe sichtbar. Die Vakuumpumpe 100 weist im Bereich des linken Einlasses 102 eine längliche Ausnehmung 108 auf, die sich im Wesentlichen parallel zu einer Rotorachse des Rotors 106 erstreckt. Die Ausnehmung 108 ist längsseitig durch zwei Kanten 110 begrenzt, die jeweils ein Hinderungsmittel bilden, welches ein in einem Fehlerfall gelöstes Rotorteil daran hindert, aus dem Einlass 102 auszutreten. Auch die übrigen Einlässe 102 können derartige oder andere Hinderungsmittel aufweisen.

Die Kanten 110 sind in einer erwarteten Flugbahn eines gelösten Rotorteils im Wesentlichen als dessen erstes Hindernis angeordnet und sorgen so für eine Umlenkung des Rotorteils weg von dem Einlass. Durch eine Kollision des Rotorteils mit einer der Kanten 110 oder mit einer Innenwand der Ausnehmung 108 wird außerdem kinetische Energie des Rotorteils abgebaut, so dass das Rotorteil anschließend eine geringere Geschwindigkeit aufweist, selbst wenn das Rotorteil nicht vollständig an einem Austritt aus dem Einlass 102 gehindert werden kann.

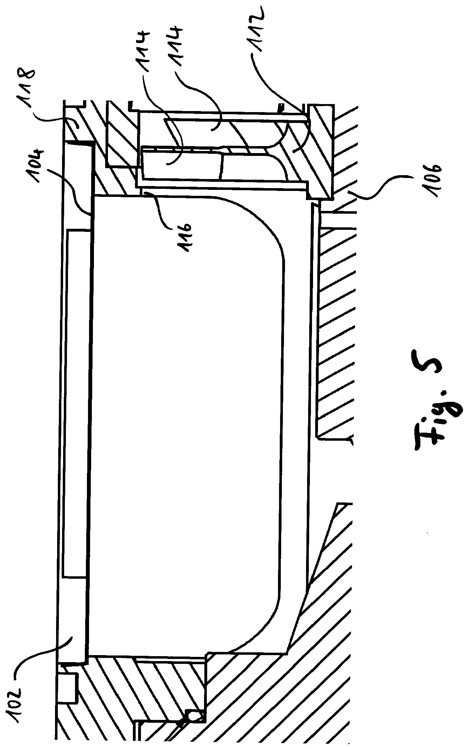

Fig. 5 zeigt eine Schnittansicht einer weiteren Splitflow-Vakuumpumpe, wobei die Schnittebene entlang einer Rotorachse eines Rotors 106 verläuft. Dabei ist jedoch nur ein einem Einlass 102 zugeordneter Teilbereich der Vakuumpumpe dargestellt. Der Einlass 102 ist mit einem Schutzgitter 104 versehen. Der Rotor 106 umfasst eine Mehrzahl von Rotorscheiben 112, von denen jedoch in Fig. 5 nur eine dargestellt ist. Die Rotorscheibe 112 umfasst eine Mehrzahl von in Umfangsrichtung beabstandet angeordneten Rotorschaufeln 114, die sich im Betrieb der Vakuumpumpe mit dem Rotor 106 mit hoher Geschwindigkeit um die Rotorachse drehen. Insbesondere die Rotorschaufeln 114 können in einem Fehlerfall abbrechen und anschließend mit entsprechend hoher Geschwindigkeit durch das Innere der Vakuumpumpe und auch in Richtung des Einlasses 102 fliegen. Dies kann eine Gefahr zum Beispiel für empfindliche Geräte in einem an den Einlass 102 angeschlossenen, nicht dargestellten Rezipienten darstellen.

Es ist eine Kante 116 vorgesehen, die ein Hinderungsmittel bildet. Die Kante 116 ist als um die Rotorachse herum verlaufende Kante ausgebildet. Dabei erstreckt sich die Kante 116 an einer Innenfläche eines Gehäuseteils 118 entlang und ist einteilig an diesem ausgebildet. Die Kante 116 ist außerdem in einer Pumprichtung, welche in Fig. 5 von oben durch den Einlass 102 hinein in das Innere der Vakuumpumpe und anschließend vorbei an den Rotorschaufeln 114 nach rechts verläuft, zwischen dem Einlass 102 und den Rotorschaufeln 114 angeordnet. Die Kante 116 wirkt somit als erstes Hindernis für eine im Fehlerfall gelöste Rotorschaufel 114 und bewirkt eine Umlenkung der Rotorschaufel weg von dem Einlass 102.

Die Kante 116 ist in der vorliegenden Ausführungsform als vollständig um den Rotor 106 herum verlaufende Kante ausgebildet. In einer alternativen Ausführungsform kann sich die Kante 116 aber auch lediglich über einen Teilwinkelbereich in Bezug auf die Rotorachse erstrecken, wobei der Teilwinkelbereich insbesondere in Richtung des Einlasses 102 ausgerichtet ist.

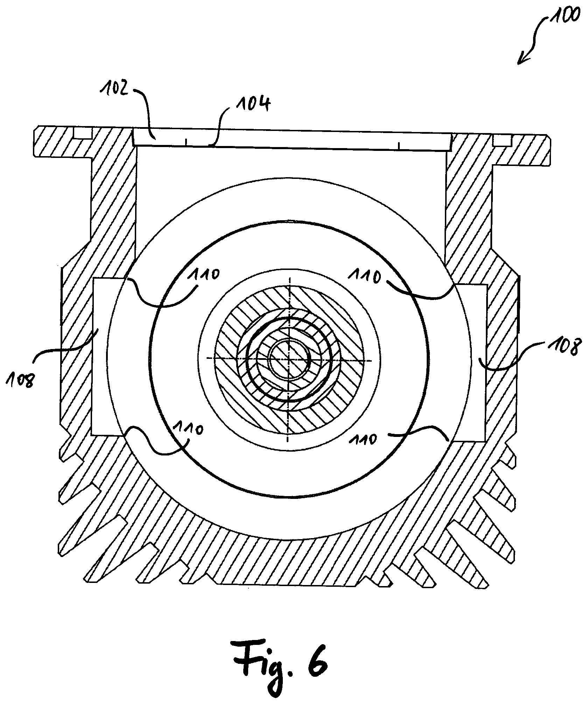

In Fig. 6 ist eine weitere Ausführungsform einer Splitflow-Vakuumpumpe 100 in einer Schnittansicht quer zu einer Rotorachse dargestellt. Die Schnittansicht zeigt einen Einlass 102, der ebenfalls mit einem Schutzgitter 104 ausgestattet ist. Die Vakuumpumpe 100 weist zwei Ausnehmungen 108 auf, die sich jeweils parallel zu der Rotorachse erstrecken. Eine jeweilige Ausnehmung 108 ist als rechteckige Nut ausgebildet und durch Kanten 110 seitlich begrenzt, welche als Hinderungsmittel für im Fehlerfall gelöste Rotorteile wirken.

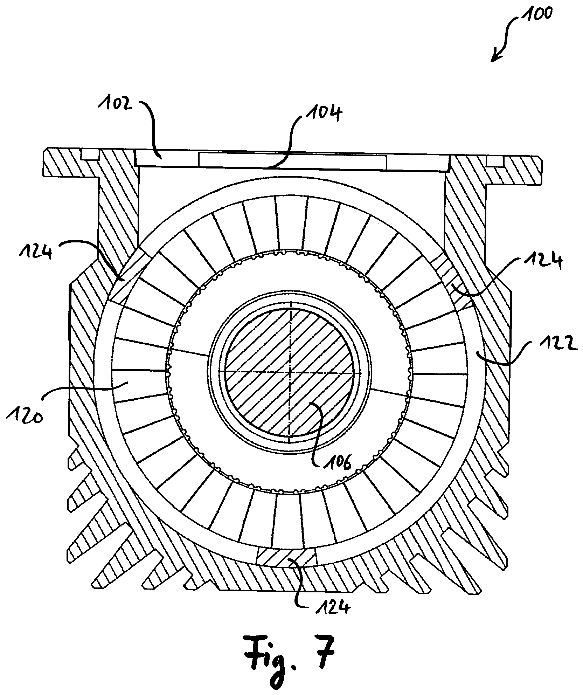

In Fig. 7 ist eine alternative Ausführungsform einer Splitflow-Vakuumpumpe 100 ebenfalls in einer Schnittansicht quer zu einer Rotorachse eines Rotors 106 dargestellt. Auch die Vakuumpumpe 100 der Fig. 7 weist einen Einlass 102 mit einem Schutzgitter 104 auf. In Fig. 7 sind außerdem eine Mehrzahl von Statorschaufeln 120 einer Statorscheibe sichtbar.

Die Vakuumpumpe 100 der Fig. 7 weist ebenfalls ein Hinderungsmittel auf, welches in dieser Ausführungsform aber als Distanzring 122 mit drei Stegen 124 ausgebildet ist. Der Distanzring 122 dient dazu, einen Abstand zwischen zwei entlang der Rotorachse aufeinanderfolgenden Statorscheiben zu definieren. In axialer Richtung aus der Bildebene der Fig. 7 heraus ist also zumindest eine weitere Statorscheibe vorgesehen. Bei dem Einlass 102 handelt es sich vorteilhafterweise nicht um einen ersten Einlass der Splitflow-Vakuumpumpe, sondern zum Beispiel um einen mittleren Einlass 102, zum Beispiel entsprechend dem mittleren Einlass 102 der Fig. 4.

Die Stege 124 des Distanzrings 122 sind in einem Winkelabstand von etwa 120° angeordnet, wobei jedoch auch andere Winkelabstände und andere Zahlen von Stegen 124 vorgesehen sein können.

Jeweils zwei Stege 124 bilden in Umfangsrichtung zwischen einander einen Freiraum. Der in Fig. 7 obere Freiraum ist dabei dem Einlass 102 zugewandt, um eine gute Durchlässigkeit für zu förderndes Prozessgas, also einen guten Leitwert, zu gewährleisten. Die in Fig. 7 nach links unten und rechts unten ausgerichteten Freiräume sind durch die jeweiligen Stege 124 begrenzt und die Stege 124 bilden eine Mehrzahl an Kanten, mit denen gelöste Rotorteile kollidieren können, so dass die Rotorteile umgelenkt werden oder ihre kinetischen Energie verringert wird.

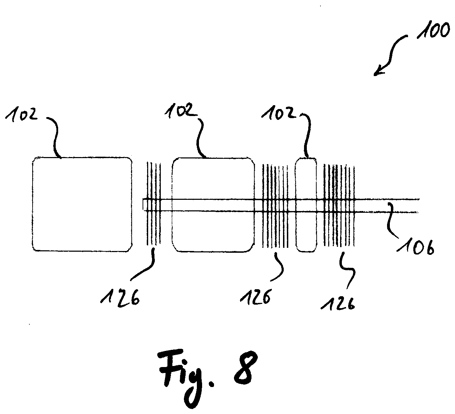

In Fig. 8 ist ein Schema einer weiteren Ausführungsform einer Splitflow-Vakuumpumpe 100 mit drei Einlässen 102 gezeigt. Ein Rotor 106 weist eine Mehrzahl von Turbovakuumpumpstufen ("Turbostufen") 126 auf, die in Pumprichtung jeweils hinter einem der Einlässe 102 angeordnet sind. Eine jeweilige Turbostufe 126 weist eine Mehrzahl an Rotorschaufeln auf, die in wenigstens einer Rotorebene angeordnet sind. Die Rotorschaufeln bzw. die Rotorebenen sind dabei axial versetzt zu den Einlässen 102 angeordnet. Bei einer tatsächlichen Ausführungsform gemäß Fig. 8 wären also die Turbostufen 126 bzw. die Rotorschaufeln durch die Einlässe 102 hindurch nicht sichtbar bzw. durch die zwischen den Einlässen 102 ausgebildeten Gehäuseteile verdeckt. Hierdurch wird ebenfalls die Sicherheit gegen Austritt von Rotorteilen aus den jeweiligen Einlässen weiter verbessert.

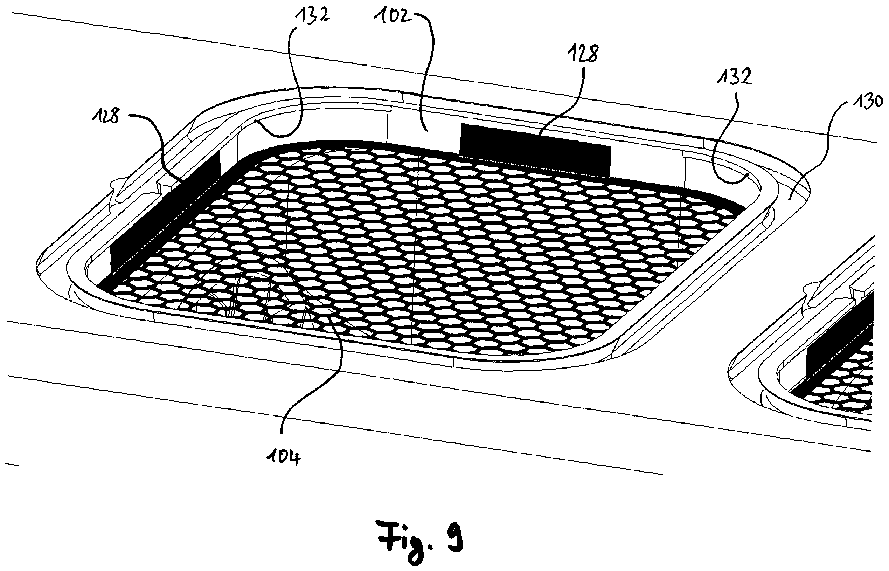

In Fig. 9 ist ein Einlass 102 einer weiteren beispielhaften Splitflow-Vakuumpumpe gezeigt, welcher mit einem Schutzgitter 104 versehen ist. Das Schutzgitter 104 weist vier Haltelaschen 128 auf, die über eine elastische Rückstellkraft, welche jeweils gegen eine Wand des Einlasses 102 wirkt, das Schutzgitter 104 in seiner Position halten. Von den Haltelaschen 128 sind in Fig. 9 jedoch aufgrund der Perspektive nur zwei Haltelaschen 128 sichtbar. Die übrigen Haltelaschen 128 liegen den gezeigten jeweils gegenüber. Der Einlass 102 ist zur Abdichtung mit einer umlaufenden Nut 130 für einen nicht dargestellten O-Ring versehen.

An dem Einlass 102 sind zwei als teilweise um den Einlass 102 umlaufende Kanten 132 ausgebildete Hinderungsmittel vorgesehen. Eine jeweilige Kante 130 bildet einen Fixiervorsprung, der eine der Haltelaschen 128 gegen eine Verschiebung nach oben hin sichert. Das gleiche gilt für die gegenüberliegende Kante 130, welche die nicht sichtbare Haltelasche 128 sichert. Somit ist das Schutzgitter 104 gegen eine Verschiebung nach oben, also in einen Rezipienten hinein, gesichert und im Fehlerfall gelöste Rotorteile werden durch das gesicherte Schutzgitter 104 wirksam in der Vakuumpumpe gehalten. Beispielsweise kann aber auch eine Kante für mehrere Haltelaschen 128 oder z.B. eine zumindest im Wesentlichen vollständig umlaufende Kante vorgesehen sein.

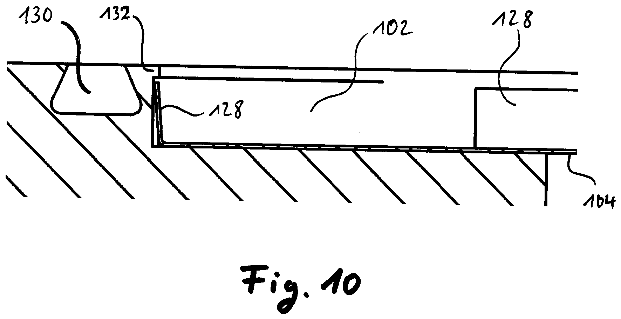

In Fig. 10 ist die Funktion der Kante 132 in einer Schnittansicht weiter veranschaulicht. Die Kante 132 hindert die Haltelasche 128 und somit das Schutzgitter 104 an einer Bewegung nach oben, also in den Rezipienten hinein. Die Haltelasche 128 ist einteilig mit dem restlichen Schutzgitter 104 ausgebildet und schnappt bei Montage des Schutzgitters 104 von oben unter der Kante 132 ein. Das Schutzgitter 104 lässt sich also einfach montieren, der Rezipient ist vor gelösten Rotorteilen geschützt und es sind keine zusätzlichen Befestigungselemente wie z.B. Schrauben notwendig.

Die hierin verwendeten Richtungsangaben "oben" und "unten" beziehen sich lediglich auf die Darstellungen. Die gezeigten Gegenstände können in der Praxis auch andere Orientierungen aufweisen.

Auch wenn die hierin beschriebenen Ausführungsformen hauptsächlich anhand von beispielhaften Splitflow-Vakuumpumpen beschrieben werden, lassen sich erfindungsgemäß ihre Merkmale und Vorteile grundsätzlich auch bei anderen Arten von Turbomolekularpumpen verwirklichen.

### Bezugszeichenliste

- 10: Fluidkanal
- 12: Gehäuse
- 14: Ventilschieber
- 16: Durchlassbereich
- 18: Führung
- 20: Feder
- 22: Gehäusewand
- 24: Membran
- 26: Steuerraum
- 28: Steuerkammer
- 30: Verbindung
- 32: Schaltventil
- 34: Verbindung
- 36: Verbindung
- 38: Solenoid
- 40: Einlass
- 42: Rollmembran
- 44: Ringwulst
- 46: Splitflow-Vakuumpumpe
- 48: Turbovakuum-Pumpstufe
- 50: Turbovakuum-Pumpstufe
- 52: Holweck-Pumpstufe
- 54: Einlass
- 56: Einlass
- 58: Einlass
- 60: Auslass
- 62: Ventil
- 64: Steuerleitung
- 100: Splitflow-Vakuumpumpe
- 102: Einlass
- 104: Schutzgitter
- 106: Rotor
- 108: Ausnehmung
- 110: Kante
- 112: Rotorscheibe
- 114: Rotorschaufel
- 116: Kante
- 118: Gehäuseteil
- 120: Statorschaufel
- 122: Distanzring
- 124: Steg
- 126: Turbovakuum-Pumpstufe
- 128: Haltelasche
- 130: Nut
- 132: Kante

## Patentansprüche

1. Vakuumsystem mit einer Vakuumpumpe (46) oder einer Anordnung aus zumindest einer Vakuumpumpe und wenigstens einem Rezipienten, bevorzugt einer Vakuumkammer oder einem Messgerät wie z.B. einem Elektronenmikroskop,
wobei die Vakuumpumpe (46) zumindest einen Einlass (58) zum Einlassen von zu förderndem Arbeitsfluid aus einem bzw. dem Rezipienten und einen Auslass (60) zum Ausstoßen des zu fördernden Arbeitsfluids aufweist, wobei ein Strömungspfad (10) zwischen Einlass und Auslass der Vakuumpumpe definiert ist,
wobei das System umfasst:
eine Vorvakuumpumpe, um am Auslass (60) der Vakuumpumpe (46) ein Vorvakuum zu erzeugen,
einen Arbeitsbereich (10), der den Strömungspfad (10) für das Arbeitsfluid umfasst,
ein Trennorgan (24),
einen Steuerraum (26), welcher durch das Trennorgan (24) von dem Arbeitsbereich (10) getrennt ist und in welchem während des Betriebs der Vakuumpumpe ein relativ zum Druck im Arbeitsbereich (10) veränderbarer Steuerdruck herrscht;
wobei durch Verändern des Steuerdrucks mittels des Trennorgans (24) eine Arbeitsbewegung im Arbeitsbereich (10) durchführbar ist,
wobei durch die Arbeitsbewegung die Fluidströmung entlang des Strömungspfades (10) an einem Abschnitt des Strömungspfades (10) beeinflussbar ist, indem durch die Arbeitsbewegung ein Strömungsquerschnitt des Strömungspfades (10) an zumindest einer Arbeitsstelle veränderbar ist, wobei eine Verbindung (64) einen am Auslass (60) der Vakuumpumpe (46) herrschenden Druck, nämlich den Vorvakuumdruck, an den Steuerraum (26) kommuniziert.

2. Vakuumsystem nach Anspruch 1,
**dadurch gekennzeichnet, dass**
für den Steuerraum (26) eine erste Verbindung (34) zu einem ersten Bereich mit einem ersten Druck und eine zweite Verbindung (36) zu einem zweiten Bereich mit einem zweiten Druck vorgesehen sind, wobei zumindest eine der Verbindungen bezüglich einer Durchlässigkeit oder eines Leitwerts steuerbar ist und wobei der erste oder der zweite Druck der an dem Auslass der Vakuumpumpe herrschende Druck ist.

3. Vakuumsystem nach zumindest einem der vorstehenden Ansprüche,
**dadurch gekennzeichnet, dass**
das Trennorgan (24) eine Membran ist oder eine Membran umfasst.

4. Vakuumsystem nach zumindest einem der vorstehenden Ansprüche,
**dadurch gekennzeichnet, dass**
der Abschnitt an einem Einlass (40, 54, 56, 58) der Vakuumpumpe angeordnet ist oder den Einlass bildet.

5. Verfahren zum Betreiben eines Vakuumsystems nach einem der vorhergehenden Ansprüche,
bei dem eine Fluidströmung von Arbeitsfluid entlang eines Strömungspfades (10) in Abhängigkeit von einem am Auslass der Vakuumpumpe herrschenden Druck beeinflusst wird.

6. Vakuumsystem nach zumindest einem der Ansprüche 1 bis 4,
wobei die Vakuumpumpe (46) zumindest zwei Einlässe (54, 56, 58) und zumindest einen Auslass (60) umfasst und zwischen einem jeweiligen Einlass (54, 56, 58) und dem oder einem jeweiligen Auslass (60) jeweilige, zumindest teilweise voneinander verschiedene Strömungspfade definiert sind, wobei eine Fluidströmung in zumindest einem Strömungspfad (10) individuell beeinflussbar ist.

7. Vakuumsystem nach zumindest einem der Ansprüche 1 bis 4 oder 6, wobei die Vakuumpumpe eine Turbomolekularvakuumpumpe (100), insbesondere Splitflow-Pumpe, ist mit
einem Gehäuse, welches zumindest einen Einlass (102) zum Anschluss der Pumpe (100) an einen Rezipienten aufweist, und
einem in dem Gehäuse angeordneten, sich während des Betriebs um eine Rotorachse drehenden Rotor (106), der in wenigstens einer Rotorebene eine Mehrzahl von in Umfangsrichtung beabstandet angeordneten Rotorschaufeln (114) aufweist,
wobei im Bereich des Einlasses (102) zumindest ein Hinderungsmittel (108, 110, 116, 124) vorgesehen ist, welches derart angeordnet und/oder ausgebildet ist, dass ein in einem Fehlerfall gelöstes Rotorteil, insbesondere eine Rotorschaufel (114) oder ein Fragment einer Rotorschaufel (114), daran gehindert oder dabei behindert wird, aus dem Einlass (102) auszutreten.

8. Vakuumsystem nach Anspruch 7,
**dadurch gekennzeichnet, dass** das Hinderungsmittel in einer erwarteten Flugbahn eines gelösten Rotorteils als dessen erstes Hindernis angeordnet und zur Umlenkung des Rotorteils weg von dem Einlass (102) ausgebildet ist.

9. Vakuumsystem nach Anspruch 7 oder 8,
**dadurch gekennzeichnet, dass** das Hinderungsmittel dazu ausgebildet ist, durch Kollision mit dem Rotorteil diesem kinetische Energie zu nehmen.

## Claims

1. A vacuum system comprising a vacuum pump (46) or an arrangement of at least one vacuum pump and at least one recipient, preferably a vacuum chamber or a measurement device such as an electron microscope, wherein the vacuum pump (46) has at least one inlet (58) for admitting working fluid, which is to be conveyed, from a recipient or the recipient and an outlet (60) for expelling the working fluid to be conveyed, wherein a flow path (10) is defined between the inlet and the outlet of the vacuum pump, wherein the system comprises:
a backing vacuum pump to create a pre-vacuum at the outlet (60) of the vacuum pump (46);
a working region (10) which comprises the flow path (10) for the working fluid;
a separating member (24); and
a control space (26) which is separated from the working region (10) by the separating member (24) and in which a control pressure, which can be changed relative to the pressure in the working region (10), is present during the operation of the vacuum pump;
wherein a working movement can be performed in the working region (10) by changing the control pressure by means of the separating member (24), wherein the fluid flow along the flow path (10) can be influenced at a section of the flow path (10) by the working movement in that a flow cross-section of the flow path (10) can be changed at at least one working point by the working movement,
wherein a connection (64) communicates a pressure present at the outlet (60) of the vacuum pump (46), namely the pre-vacuum pressure, to the control space (26).

2. A vacuum system in accordance with claim 1,
**characterized in that**
a first connection (34) to a first region having a first pressure and a second connection (36) to a second region having a second pressure are provided for the control space (26), with at least one of the connections being controllable with respect to a permeability or a conductivity, and with the first pressure or the second pressure being the pressure present at the outlet of the vacuum pump.

3. A vacuum system in accordance with at least one of the preceding claims, **characterized in that**
the separation member (24) is a membrane or comprises a membrane.

4. A vacuum system in accordance with at least one of the preceding claims, **characterized in that**
the section is arranged at an inlet (40, 54, 56, 58) of the vacuum pump or forms the inlet.

5. A method of operating a vacuum system in accordance with at least one of the preceding claims,
in which a fluid flow of working fluid along a flow path (10) is influenced in dependence on a pressure present at the outlet of the vacuum pump.

6. A vacuum system in accordance with at least one of the claims 1 to 4,
wherein the vacuum pump (46) comprises at least two inlets (54, 56, 58) and at least one outlet (60) and respective flow paths, which are at least partly different from one another, are defined between a respective inlet (54, 56, 58) and the or a respective outlet (60), wherein a fluid flow in at least one flow path (10) can be individually influenced.

7. A vacuum system in accordance with at least one of the claims 1 to 4 or 6, wherein the vacuum pump is a turbomolecular vacuum pump (100), in particular a split-flow pump, comprising
a housing which has at least one inlet (102) for connecting the pump (100) to a recipient; and
a rotor (106) which is arranged in the housing, which rotates about a rotor axis during the operation and which has a plurality of rotor blades (114) spaced apart in the peripheral direction in at least one rotor plane, wherein at least one obstruction means (108, 110, 116, 124) is provided in the region of the inlet (102) and is arranged and/or configured such that a rotor part, in particular a rotor blade (114) or a fragment of a rotor blade (114), which has been released in the case of a fault is prevented or is in this respect hindered from exiting from the inlet (102).

8. A vacuum system in accordance with claim 7,
**characterized in that**
the obstruction means is arranged in an expected trajectory of a released rotor part as its first obstruction and is configured to deflect the rotor member away from the inlet (102).

9. A vacuum system in accordance with claim 7 or claim 8, **characterized in that**
the obstruction means is configured to take kinetic energy from the rotor part by colliding with it.

## Revendications

1. Système à vide comportant une pompe à vide (46) ou un ensemble d'au moins une pompe à vide et d'au moins un récipient, de préférence d'une chambre à vide ou d'un appareil de mesure tel qu'un microscope électronique,
dans lequel
la pompe à vide (46) présente au moins une entrée (58) pour admettre un fluide de travail à transporter hors d'un ou du récipient, et une sortie (60) pour éjecter le fluide de travail à transporter, un trajet d'écoulement (10) étant défini entre l'entrée et la sortie de la pompe à vide,
le système comprenant :
une pompe à vide préliminaire pour créer un vide préliminaire à la sortie (60) de la pompe à vide (46),
une zone de travail (10) comprenant le trajet d'écoulement (10) pour le fluide de travail,
un élément de séparation (24),
une chambre de commande (26) qui est séparée de la zone de travail (10) par l'élément de séparation (24) et dans laquelle règne, pendant le fonctionnement de la pompe à vide, une pression de commande qui peut être modifiée par rapport à la pression dans la zone de travail (10);
dans lequel
un mouvement de travail peut être effectué dans la zone de travail (10) par modification de la pression de commande au moyen de l'élément de séparation (24),
l'écoulement de fluide le long du trajet d'écoulement (10) peut être influencé au niveau d'une portion du trajet d'écoulement par le mouvement de travail du fait qu'une section transversale d'écoulement du trajet d'écoulement (10) peut être modifiée à au moins un emplacement de travail par le mouvement de travail,
une liaison (64) communique une pression, régnant à la sortie (60) de la pompe à vide (46), à savoir la pression de vide préliminaire, à la chambre de commande (26).

2. Système à vide selon la revendication 1,
**caractérisé en ce que**
une première liaison (34) vers une première zone ayant une première pression et une deuxième liaison (36) vers une deuxième zone ayant une deuxième pression sont prévues pour la chambre de commande (26), l'une au moins des liaisons étant contrôlable par rapport à une perméabilité ou à une conductivité, et la première ou la deuxième pression étant la pression qui règne à la sortie de la pompe à vide.

3. Système à vide selon l'une au moins des revendications précédentes, **caractérisé en ce que**
l'élément de séparation (24) est une membrane ou comprend une membrane.

4. Système à vide selon l'une au moins des revendications précédentes, **caractérisé en ce que**
ladite portion est disposée à une entrée (40, 54, 56, 58) de la pompe à vide ou constitue l'entrée.

5. Procédé de fonctionnement d'un système à vide selon l'une au moins des revendications précédentes,
dans lequel un écoulement de fluide de travail le long d'un trajet d'écoulement (10) est influencé en fonction d'une pression régnant à la sortie de la pompe à vide.

6. Système à vide selon l'une au moins des revendications 1 à 4,
dans lequel la pompe à vide (46) comprend au moins deux entrées (54, 56, 58) et au moins une sortie (60), et des trajets d'écoulement respectifs au moins partiellement différents les uns des autres sont définis entre une entrée respective (54, 56, 58) et la ou une sortie respective (60), un écoulement de fluide dans au moins un trajet d'écoulement pouvant être influencé individuellement.

7. Système à vide selon l'une au moins des revendications 1 à 4 ou 6, dans lequel la pompe à vide est une pompe à vide turbomoléculaire (100), en particulier une pompe à débit partagé, comportant un boîtier qui comprend au moins une entrée (102) pour raccorder la pompe (100) à un récipient, et
un rotor (106) qui est disposé dans le boîtier, qui tourne autour d'un axe de rotor pendant le fonctionnement et qui présente, dans au moins un plan de rotor, une pluralité de pales de rotor (114) disposées en étant espacées dans la direction circonférentielle,
dans lequel au moins un moyen d'obstruction (108, 110, 116, 124) est prévu dans la zone de l'entrée (102), qui est disposé et/ou réalisé de telle sorte qu'une partie du rotor, en particulier une pale de rotor (114) ou un fragment d'une pale de rotor (114), qui s'est détaché(e) en cas de défaut, est empêché(e) ou obstrué(e) de sortir de l'entrée (102).

8. Système à vide selon la revendication 7,
**caractérisé en ce que**
le moyen d'obstruction est disposé dans une trajectoire de vol attendue d'une partie de rotor détachée, afin de constituer son premier obstacle, et est réalisé pour dévier la partie de rotor en éloignement de l'entrée (102).

9. Système à vide selon la revendication 7 ou 8,
**caractérisé en ce que**
le moyen d'obstruction est réalisé pour enlever l'énergie cinétique de la partie de rotor par collision avec celle-ci.
